# EUROPEAN PATENT APPLICATION

(11) **EP 3 226 091 A1**
(43) Date of publication of application: **04.10.2017**
(21) Application number: 15862520.2
(22) Date of filing: 26.11.2015
(51) Int. Cl.: G05B 23/02, H04L 29/14, H04M 11/00

(54) **INTEGRATED MONITORING CONTROL APPARATUS, INTEGRATED MONITORING CONTROL SYSTEM, AND MONITORING CONTROL APPARATUS**

(30) Priority: 27.11.2014 JP 2014240110
(71) Applicant: Mitsubishi Electric Corporation, Chiyoda-ku Tokyo 100-8310 (JP)
(72) Inventor: IGAWA, Satoru, Tokyo 100-8310 (JP)
(74) Representative: Lavoix
(86) International application number: PCT/JP2015/083178
(87) International publication number: WO 2016/084881

(57) **Abstract**

An integrated monitoring control apparatus (30) includes a process definer (321) to indicate a correspondence between a classification ID included in status information indicating status of the monitoring control device (20, 20a, 20b, 20c) or status of an equipment (10) subject to monitoring by the monitoring control device (20, 20a, 20b, 20c) and a process performed on the status information, a receiver (310) to receive the status information transmitted from the monitoring control device (20, 20a, 20b, 20c), and a process controller (320) to cause performance, on the status information received by the receiver (310), of the process determined by the process definer (321) based on the classification ID included in the status information.

## Description

### Technical Field

The present disclosure relates to an integrated monitoring control apparatus, an integrated monitoring control system and relates to the monitoring control device for processing of display of a screen and the like by integrated processing of status information received from a monitoring control device including computers and the like.

### Background Art

Integrated monitoring control systems include, for example, satellite control ground-based systems that control a satellite. The satellite control ground-based system monitors status of many types of equipment, such as equipment for performing radio wave communication with the satellite, equipment for controlling an antenna, or the like, and the satellite control ground-based system performs control in response to the monitored status. Thus in this type of system, monitoring status and the required control are achieved generally by installing numerous monitoring devices and control devices in response to each of a large number of types of equipment. Further, in the integrated monitoring control system, as an integrated monitoring control apparatus, a dedicated computer is provided for integrating information from multiple monitoring and control devices, understanding of the status of satellites and ground-based systems controlling the satellites, and performing suitable control. The integrated monitoring control apparatus uses data communication via an interface such as a LAN through the entire satellite management ground-based system to acquire failure occurrence information and present status information, and performs processing of display on a monitor or the like.

In the integrated monitoring control system described in reference to the satellite control ground-based system, the integrated monitoring control apparatus is required to include functions for acquiring the status information, checking the status information, displaying on the screen, or the like. These functions require configuration so as to enable use by operators who are in charge of different operations. Further, ability is required to respond to design revisions such as revisions and additions of equipment due to failures, function enhancements, and function revisions. Thus a heavy burden is imposed by system development. Thus technology is required that forms a flexibly-configurable integrated monitoring control system that acquires information relating to the status of many monitoring control apparatuses of different types and performs the required processing to meet various types of requirements.

An integrated monitoring control apparatus that performs many types of processing on acquired electronic information of different types divides the acquired electronic information into groups and processes the electronic information on the basis of rules that are different for each group (for example, see Patent Literature 1).

Further, an integrated monitoring control apparatus that performs many types of processing on acquired electronic information of different types defines correspondence between plant data and software processing the plant data, and upon selection of the plant data, extracts the corresponding software (for example, see Patent Literature 2).

### Citation List

### Patent Literature

Patent Literature 1: Unexamined Japanese Patent Application Kokai Publication No. 2004-334576 (FIG. 1)
Patent Literature 2: Japanese Patent No. 5077826 (FIG. 1)

### Summary of Invention

### Technical Problem

The integrated monitoring control apparatus of the invention described in Patent Literature 1 divides the acquired electronic information into groups and processes the electronic information on the basis of different rules for each group. However, this integrated monitoring control apparatus has problems in that there is no means for performing the changes that accompany revision of the classifications of groups, changing of equipment, additions, or the like, and the functions of this integrated monitoring control apparatus cannot be flexibly changed.

The invention described in Patent Literature 2 defines correspondence between the plant data and software capable of processing the plant data, and upon selecting the plant data, extracts the software that is capable of processing. However, the invention described in Patent Literature 2 has a problem in that there is no means for determining the processing software from the extracted software.

The objective of the present disclosure is to solve problems such as those described above, and to obtain an integrated monitoring control apparatus, an integrated monitoring control system and a monitoring control device that are capable of being flexibly configured to perform the required processing of the status information acquired from the monitoring control devices in a manner that matches requirements.

### Solution to Problem

An integrated monitoring control apparatus according to the present disclosure includes:
a process definer to indicate a correspondence between a classification ID included in status information indicating status of a monitoring control device or status of equipment subject to monitoring by the monitoring control device and a process performed on the status information;
a receiver to receive the status information transmitted from the monitoring control device; and
a process controller to cause, on the status information received by the receiver, performance of the process determined by the process definer based on the classification ID included in the status information.

An integrated monitoring control system according to the present disclosure includes:
a monitoring control device to generate status information indicating status of equipment subject to monitoring or status of the monitoring control device, and append to the generated status information a classification ID indicating a type of the status information, and transmits the status information to an integrated monitoring control apparatus; and
the integrated monitoring control apparatus including
   a process definer to indicate a correspondence between the classification ID and a process performed on the status information, and
   a process controller to cause the status information to be processed by the process determined by the process definer based on the classification ID included in the status information received from the monitoring control device.

A monitoring control device according to the present disclosure includes:
a status information classification definer to indicate a correspondence between status information indicating status of an equipment subject to monitoring or status of the monitoring control device and a classification ID indicating a classification of the status information;
a status information generator to generate the status information;
an ID grantor to append a classification ID indicating a type of status information to the status information, the status information indicating status of equipment subject to monitoring or status of the monitoring control device; and
a status information transmitter to transmit to an integrated monitoring control apparatus the status information including the classification ID.

### Advantageous Effects of Invention

According to the present disclosure, the integrated monitoring control apparatus, the integrated monitoring control system, and the monitoring control device are capable of flexible configuration for performing the required process based on requirements on the status information representing the status of the monitoring control device or the status of the equipment monitored by the monitoring control device.

### Brief Description of Drawings

FIG. 1 is an overall system drawing illustrating an integrated monitoring control system according to Embodiment 1 of the present disclosure;
FIG. 2A is an example configuration of a monitoring screen displayed on a display screen of the integrated monitoring control apparatus according to Embodiment 1 of the present disclosure;
FIG. 2B is an example configuration of a monitoring screen displayed on a display screen of the integrated monitoring control apparatus according to Embodiment 1 of the present disclosure;
FIG. 3A is an example configuration of a detail screen displayed on the display screen of the integrated monitoring control apparatus according to Embodiment 1 of the present disclosure;
FIG. 3B is an example configuration of a detail screen displayed on the display screen of the integrated monitoring control apparatus according to Embodiment 1 of the present disclosure;
FIG. 4 is an example of status information transmitted from a monitoring control device according to Embodiment 1 of the present disclosure;
FIG. 5 is a function block diagram illustrating configuration of the monitoring control device according to Embodiment 1 of the present disclosure;
FIG. 6 is a drawing illustrating an example of allocation of classification IDs to the monitoring control device according to Embodiment 1 of the present disclosure;
FIG. 7 is a flowchart illustrating processing performed by the monitoring control device according to Embodiment 1 of the present disclosure;
FIG. 8 is an example of a status information table of the monitoring control device according to Embodiment 1 of the present disclosure;
FIG. 9 is a function block diagram illustrating configuration of the integrated monitoring control apparatus according to Embodiment 1 of the present disclosure;
FIG. 10 is a flowchart illustrating processing performed by a process controller of the integrated monitoring control apparatus according to Embodiment 1 of the present disclosure;
FIG. 11 is an example of status information stored in pan-classification-ID status information of the integrated monitoring control apparatus according to Embodiment 1 of the present disclosure;
FIG. 12 is an example of definitions of display areas displaying the status information of the integrated monitoring control apparatus according to Embodiment 1 of the present disclosure;
FIG. 13 is a flowchart illustrating processing performed by a pan-classification-ID controller of the integrated monitoring control apparatus according to Embodiment 1 of the present disclosure;
FIG. 14 is a function block diagram illustrating configuration of an integrated monitoring control apparatus according to Embodiment 2 of the present disclosure;
FIG. 15 is an example of a process correspondence table of the integrated monitoring control apparatus according to Embodiment 2 of the present disclosure; and
FIG. 16 is a flowchart illustrating processing performed by a pan-classification-ID controller of the integrated monitoring control apparatus according to Embodiment 2 of the present disclosure.

### Description of Embodiments

### Embodiment 1

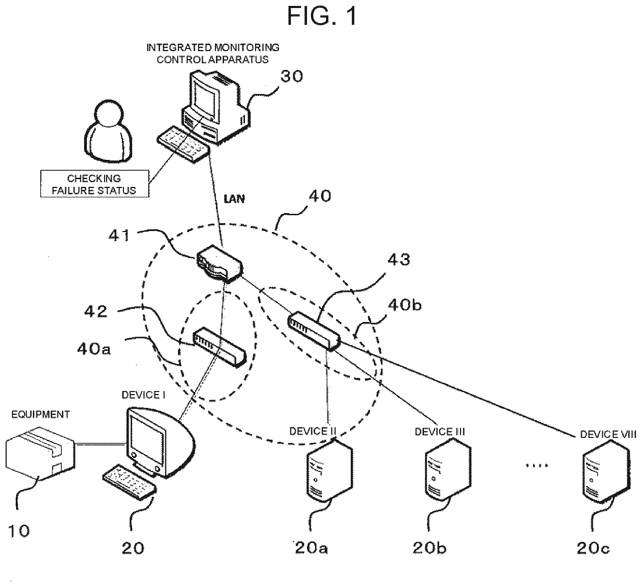

FIG. 1 is an overall drawing illustrating an integrated monitoring control system according to Embodiment 1 of the present disclosure. In FIG. 1, reference symbol 10 indicates equipment, such as an artificial satellite or ground-based device, that is subject to monitoring and control. Reference symbols 20, 20a, 20b, and 20c each indicate a monitoring control device that performs monitoring and control of the equipment 10 and related instruments. Reference symbol 30 indicates an integrated monitoring control apparatus that supplies required information to an operator and performs control in response to a status. The integrated monitoring control apparatus 30 receives transmissions from the monitoring control device 20, the monitoring control device 20a, the monitoring control device 20b, and the monitoring control device 20c, integrates the information on status of equipment subject to monitoring and a status of the local monitoring control apparatus, and performs processing required for generating a display screen or the like. The monitoring control device 20, the monitoring control device 20a, the monitoring control device 20b, and the monitoring control device 20c may be described hereinafter by the term "monitoring control devices 20-20c". Further, in this integrated monitoring control system, the monitoring control devices 20-20c in the example of FIG. 1 are assigned names such as device I, device II, device III, and device IV, respectively.

The monitoring control devices 20-20c and the integrated monitoring control apparatus 30 are mutually interconnected by a network 40. The network 40 has a structure that couples sub-networks 40a and 40b by a router 41; reference symbol 42 indicates a HUB included in the sub-network 40a; and reference symbol 43 indicates a HUB included in the sub-network 40b. Further, the configuration of the network of FIG. 1 is illustrative, and any configuration may be used that allows efficient coupling between the monitoring control devices 20-20c and the integrated monitoring control apparatus 30.

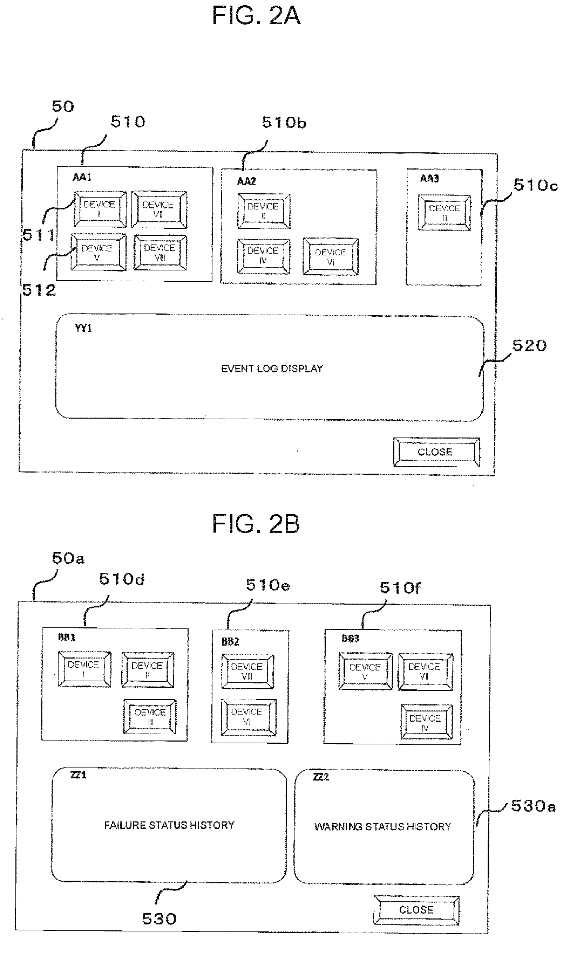

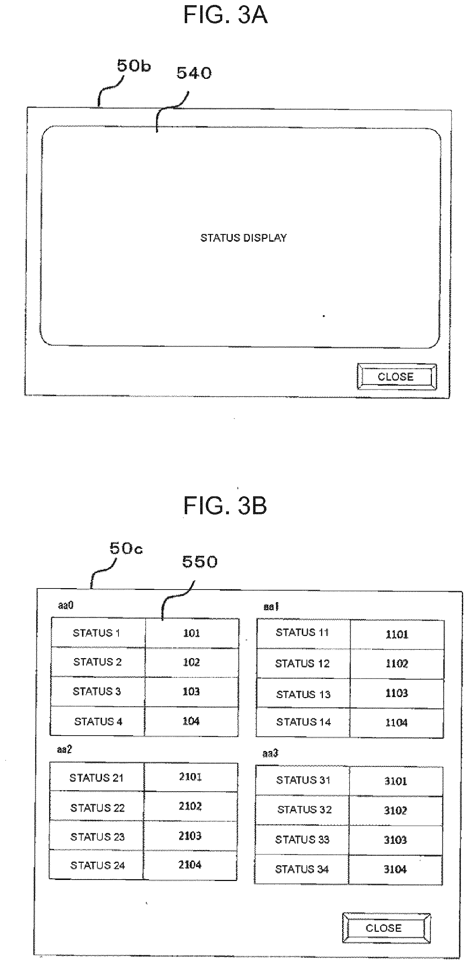

FIG. 2A and FIG. 2B illustrate example configurations of monitoring screens that are displayed on the display screen of the integrated monitoring control apparatus 30 according to Embodiment 1 of the present disclosure. Further, FIG. 3A and FIG. 3B illustrate example configurations of detail screens to be displayed on the display screen of the integrated monitoring control apparatus 30 according to Embodiment 1, as may be required. The integrated monitoring control apparatus 30, in response to a request of an operator, integrates information transmitted from the monitoring control devices 20-20c concerning devices of interest and monitoring targets. Monitoring screens are formed as in FIG. 2A and FIG. 2B indicating the integrated information, and the monitoring screens are displayed sequentially, multiple monitoring screens are displayed simultaneously, or the like. Further, as may be required, a detail screen such as FIG. 3A or FIG. 3B is displayed, detailed information of an integrated management system is displayed, and the like.

A monitoring screen 50 illustrated as an example in FIG. 2A and a monitoring screen 50a illustrated as an example in FIG. 2B are monitoring screens displayed on the display screen of the integrated monitoring control apparatus. The integrated monitoring control apparatus processes, for each of the categories, are performed with respect to the monitoring screen predetermined display and the like concerning the status information for the equipment 10 in the scope subject to monitoring and for the monitoring control devices 20-20c classified into categories for each type of information required by the operators. The classified categories are distinguished from each other by assignment of classification IDs such as AA1, AA2,... ZZ1, and the like. When the monitoring screen is formed, a pan-classification-ID display area is arranged on the monitoring screen as required for operation, so that the status information classified by the classification ID is displayed in the arranged area. By this means, various types of necessary processing, such as display processing, of the information as required for operation can be achieved.

For example, in the monitoring screen 50, continuously monitored status information is classified as "YY1", and all the status information given the YY1 classification, together with the time, is displayed as text in a status window 540 of the display area YY1. Further, in order to monitor specific status information concerning "failures" and "warnings" in the monitoring screen 50a, such specific status information is classified as "ZZ1" and "ZZ2", respectively. An item indicating "failure" extracted from the status information classified as ZZ1 is displayed as text in a status window 530 of the display area ZZ1, and an item indicating "warning" extracted from the status information classified as ZZ2 is displayed as text in a status window 530a of the display area ZZ2.

Further, the target status information is classified as "AA1 ", and a start button 511 for each device or the like is arranged in a corresponding display area AA1 on the monitoring screens 50 and 50a concerning status information required to be displayed in detail for each device, as may be required, by the display area 540 of a detail screen 50b illustrated in FIG. 3A. Upon these start buttons being pressed, the detail screen 50b is displayed, enabling the text display of the status information in the detail screen 50b.

Further, the target status information is classified as "AA1" and "aa0", and the start button 511 for each device or the like is arranged in a corresponding display area AA1 on the monitoring screens 50 and 50a concerning status information required to be displayed in detail for each device, as may be required, by the display area 550 of a detail screen 50c illustrated in FIG. 3B. Upon these start buttons being pressed, the status information is displayed as text in the display area 550 or the like corresponding to aa0 on the detail screen 50c.

In the aforementioned manner, the integrated monitoring control apparatus 30 categories the status information concerning the monitoring control devices 20-20c, and forms the process for each categorized status information, such as display processing and the like. Due to the performance of display processing and the like in this manner, the status information sent to the integrated monitoring control apparatus 30 from the monitoring control devices 20-20c is sent by the integrated monitoring control apparatus 30 in a state that includes the classification ID. For example, for the status information that includes the classification ID "AA1", the process performed by the integrated monitoring control apparatus 30 corresponds to AA1, that is to say, indicates arrangement of the start button 511 for each device and the like in the display area AA1 and indicates the display of the status information as text in the detail screen 50b that is displayed upon pressing these start buttons. Alternatively, the start button 511 of each device is arranged on both the display area AA1 of the monitoring screen 50 and a display area BB1 of the monitoring screen 50a, and in the case of display of the status information as text by the detail screen 50b displayed upon pressing of these start buttons, two classification IDs are imparted, such as "AA1_BB1". Generally the status information, that includes the classification IDs and is sent to the integrated monitoring control apparatus 30 from the monitoring control devices 20-20c, indicates the respective performing of processing by the integrated monitoring control apparatus 30 corresponding to this plurality of classification IDs.

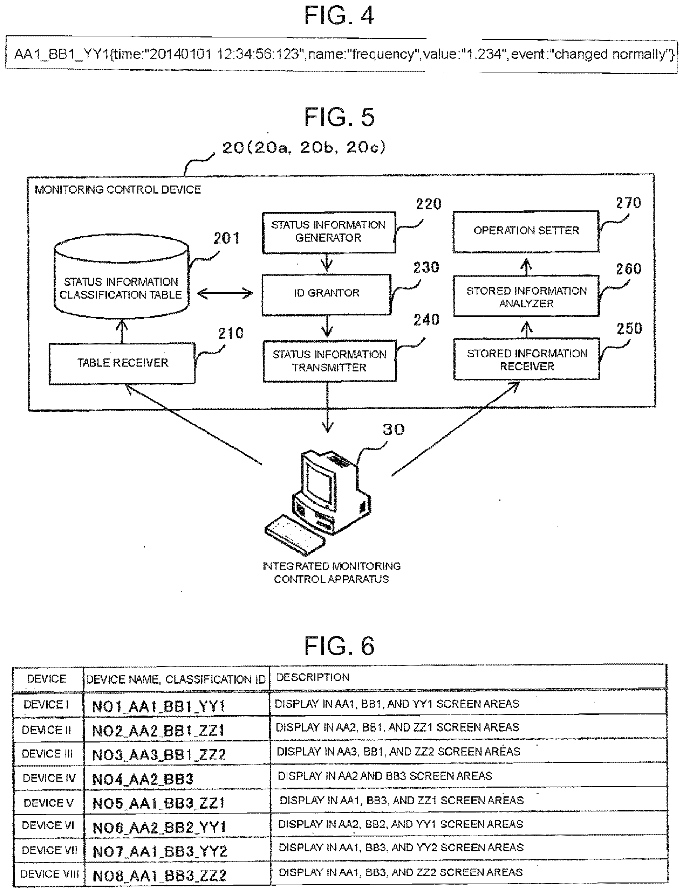

FIG. 4 illustrates an example of the status information that includes the classification ID. FIG. 4 is an example of the status information sent from the monitoring control device according to Embodiment 1 of the present disclosure. In the example of FIG. 4, the character string surrounded by the curly brackets is the status information, and "AA1_BB1_YY1" indicates the classification ID. In the example of FIG. 4, for this status information, each of the processes determined by AA1, BB1, and YY1 is performed by the integrated monitoring control apparatus 30. In the case in which the processes of AA1, BB1, and YY1 are display processes, this status information is displayed in the displayed areas indicated by AA1, BB1, and YY1, respectively. Further, whether the classification ID notation such as "AA1_BB1_YY1" means a rule for simultaneously performing the processes determined by AA1, BB1, and YY1, or alternatively, indicates a rule such as for performing the processes in order as AA1, BB1, and YY1, is understood based on the types of the performed processing.

Configuration and operation of the integrated monitoring control apparatus 30 and the monitoring control devices 20 (20a, 20b, and 20c) using the aforementioned status information that includes the classification IDs are described below. Although the below description is for the monitoring control device 20, the configuration and operation are similar for the monitoring control devices 20a, 20b, and 20c. FIG. 5 is a function block diagram illustrating configuration of the monitoring control device 20 according to Embodiment 1 of the present disclosure. In FIG. 5, the monitoring control device 20 is provided with a status information classification table 201 and a table receiver 210. The status information classification table 201 is a table that indicates correspondence between the status information indicating the status of the equipment subject to monitoring or local-apparatus status and the classification ID indicating the type of the status information. The table receiver 210 receives the status information classification table 201 from the integrated monitoring control apparatus 30. Further, the status information for which transmission to the integrated monitoring control apparatus 30 as illustrated in FIG. 6 is required is allocated on the basis of the classification ID to each of the monitoring control devices 20. FIG. 6 is a drawing illustrating an example of allocation of the classification IDs to the monitoring control devices according to Embodiment 1 of the present disclosure. NO1 to NO8 in the "Device Name, Classification ID" column in FIG. 6 are device names and correspond to the device I to device VIII, respectively. In the "Device Name, Classification ID" column, the entrees AA1 to ZZ2 are the classification IDs defining the process for the status information.

In FIG. 5, the monitoring control device 20 further includes a status information generator 220, an ID grantor 230, and a status information transmitter 240. The status information generator 220 generates the status information. The ID grantor 230 appends the classification ID to the generated status information on the basis of the status information classification table 201. The status information transmitter 240 transmits to the integrated monitoring control apparatus 30 the status information made to include the classification ID by the ID grantor 230.

Further, the monitoring control device 20 also includes a stored information receiver 250, a stored information analyzer 260, and an operation setter 270. The stored information receiver 250 receives the status information received and stored by the integrated monitoring control apparatus 30. The stored information analyzer 260 analyzes the status information received by the stored information receiver 250. The operation setter 270, on the basis of the results of the analysis of the stored information analyzer 260, performs setting such as allowing or refusing transmission of the status information from the status information transmitter 240.

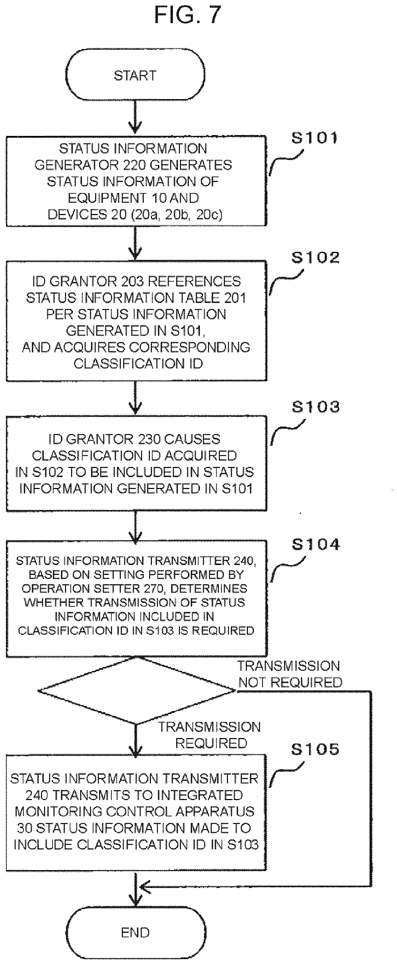

Operation of the monitoring control device 20 is described next in reference to FIG. 7. FIG. 7 is a flowchart illustrating the processes performed by the monitoring control device according to Embodiment 1 of the present disclosure. The status information generator 220 generates the status information indicating the status of the equipment 10 and the monitoring control device 20 (S101). Next, the ID grantor 230 uses the status information generated by the status information generator 220 in step S101 to refer to the status information table 201, and acquires the corresponding classification ID (S102). Further, the ID grantor 230 causes the classification ID acquired in step S102 to be included in the status information generated in the step S101 by the status information generator 220 (S103).

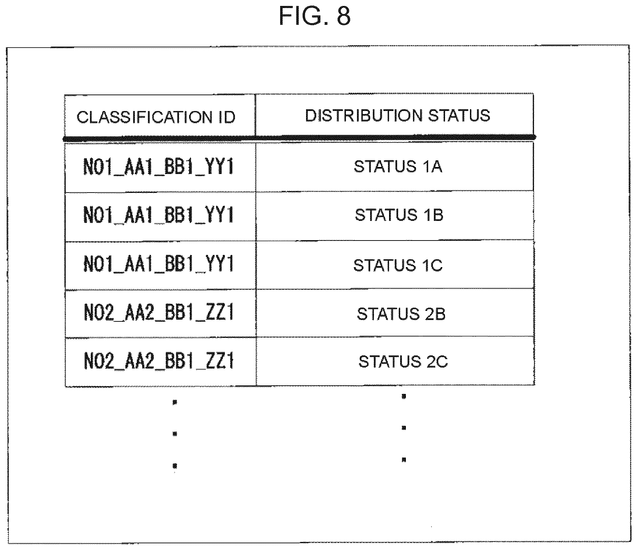

Here, the status information table 201 is configured as illustrated in FIG. 8. FIG. 8 is an example of the status information table of the monitoring control device according to Embodiment 1 of the present disclosure. FIG. 8 illustrates the correspondence between the classification IDs determined beforehand for each of the monitoring control devices 20, 20a, 20b, and 20c and the transmitted status information that is included with this classification ID, that is to say, the type of the status information provided for the process of the integrated monitoring control apparatus corresponding to this classification ID. Thus by the classification ID allocated beforehand on the basis of the status information table 201 being appended to the status information, each of the monitoring control devices 20, 20a, 20b, and 20c is allocated the providing of the status information used in the process corresponding to the classification ID performed by the monitoring control apparatus 30. Thus the monitoring control devices 20, 20a, 20b, and 20c provide to the integrated monitoring control apparatus the status information classified by the allocated classification IDs.

In FIG. 5, the ID grantor 230 refers to the status information table 201 illustrated in FIG. 8, and when the device is device I, for example, and when the status information corresponds to one of the status 1A, status 1B, or status 1C, the classification ID is made to include "NO1_AA1_BB1_YY1", on the basis of "NO1_AA1_BB1_YY1", which is the notation for the classification ID relating to NO1 classified by the status information table 201. The notation "AA1_BB1_YY1" means that the status information that includes this classification ID has data for the integrated monitoring control apparatus 30 to perform each of the process for AA1, the process for BB1, and the process for YY1.

Again in reference to FIG. 7, the status information transmitter 240, on the basis of the setting performed by the operation setter 270, determines whether the transmission of the status information appended to the classification ID during step S103 is required (S104), and if the transmission is not required, processing ends without the transmitting of the status information. If the determination in step S104 is that the transmission is required, the status information transmitter 240 transmits to the integrated monitoring control apparatus the status information that is made in step S103 to include the classification ID (S105).

Here, as illustrated in FIG. 5, the operation setter 270, on the basis of the analysis result of the stored information analyzer 260, sets whether the transmission of the status information is required. Specifically, the stored information analyzer 260 analyzes the status information which is previously received by the integrated monitoring control apparatus 30 from the other monitoring control devices 20a-20c. The stored information analyzer 260 performs processing such as checking, for each classification ID, the stored status information sent by the monitoring control device 20, and when there is a multi-system configuration with another monitoring control apparatus, determining whether the other monitoring control apparatus included in the multi-system configuration is in the operating state or wait state. The operation setter 270, on the basis of the results of analysis such as that described above, forbids transmission of the status information that has the same classification ID of the same type as that of the status information that is previously transmitted. Further, in the multi-system configuration, operations are performed such as, on the basis of the operating state of the other monitoring control apparatus, setting of the monitoring control device to the operating state and permitting the transmission of the status information, and setting the monitoring control device to the wait state and forbidding the transmission of the status information. By determining whether to permit the transmission of the status information on the basis of the setting by the operation setter 270 in step S104, the status information transmitter can increase efficiency of the exchange of the status information with the integrated monitoring control apparatus 30.

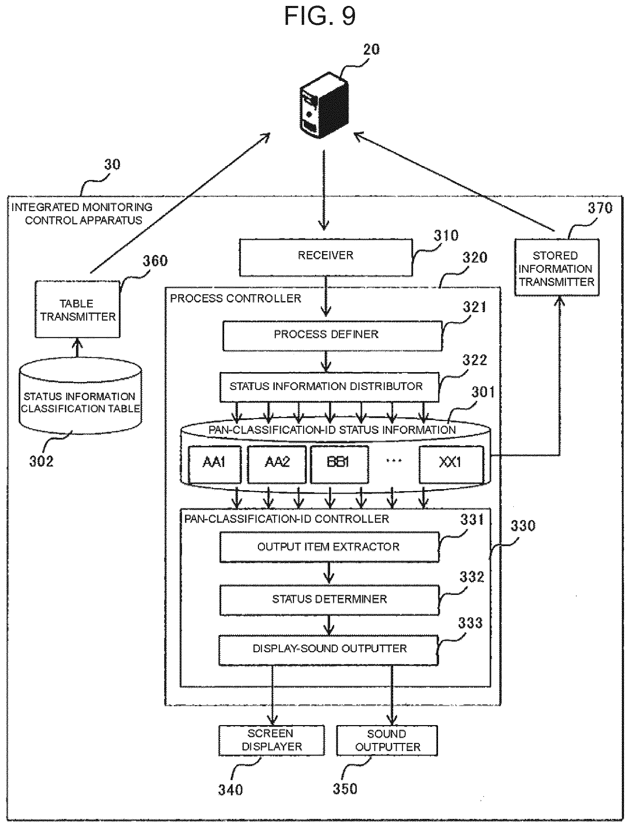

FIG. 9 is a function block diagram illustrating configuration of the integrated monitoring control apparatus 30 according to Embodiment 1 of the present disclosure. In FIG. 9, the integrated monitoring control apparatus 30 includes a receiver 310 that receives the status information transmitted from the monitoring control devices 20, 20a, 20b, and 20c, and a process controller 320 that causes processing of the status information in the process determined in response to the classification ID included in the status information received by the receiver 310. The process controller 320 includes a process definer 321, a status information distributor 322, pan-classification-ID status information 301, a pan-classification-ID controller 330, a screen display 340, and a sound outputter 350. The process definer 321 indicates the correspondence between the classification ID included in the status information received by the receiver 310 and the process for processing the status information. The status information distributor 322 distributes, for each classification ID, the status information received by the receiver 310. The pan-classification-ID status information 301 is status information distributed by the status information distributor 322 and stored for each classification ID. The pan-classification-ID controller 330 performs operations such as displaying the status information in the display area determined for each classification ID, and controlling sound output processing and the like. The screen display 340 displays the status information on the basis of a display method that is determined for each classification ID. The sound outputter 350 outputs sound as determined for each classification ID.

Further, the pan-classification-ID controller 330 includes an output item extractor 331, a status determiner 332, and a display-sound outputter 333. The output item extractor 331, for each classification ID, extracts the status information that is required for the processing determined for each classification ID. The status determiner 332 determines whether the status information corresponds to a predetermined status for failure, warning, and the like. The display-sound outputter 333, for each classification ID on the basis of the status determined by the status determiner 332, causes outputting of a display by the screen display 340 and outputting of sound by the sound outputter 350.

Further, the integrated monitoring control apparatus 30 further includes a status information classification table 302, a table transmitter 360, and a stored information transmitter 370. The status information classification table 302 is a table that indicates correspondence between the respective status information of the monitoring control devices 20, 20a, 20b, and 20c and the classification ID indicating the type of the status information. The table transmitter 360 transmits the status information classification table 302 to each of the monitoring control devices 20, 20a, 20b, and 20c. The stored information transmitter 370 transmits the pan-classification-ID status information 301 to each of the monitoring control devices 20-20c. The status information classification table 302 is transmitted to the monitoring control devices 20, 20a, 20b, and 20c by the transmitting table transmitter 360, and is stored as the status information classification table 201 in the monitoring control devices 20, 20a, 20b, and 20c. Further, the pan-classification-ID status information 301 transmitted to each of the monitoring control device 20, 20a, 20b, and 20c is received by the stored information receiver 250 of the monitoring control devices 20, 20a, 20b, and 20c, and is analyzed by the stored information analyzer 260. The results of analysis by the stored information analyzer 260 are used by the operation setter 270 for setting the permitting or forbidding of transmission of the status information.

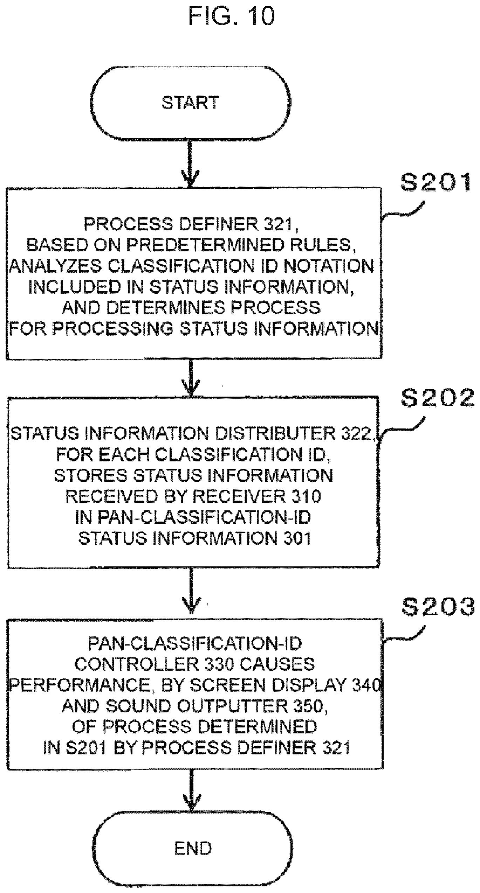

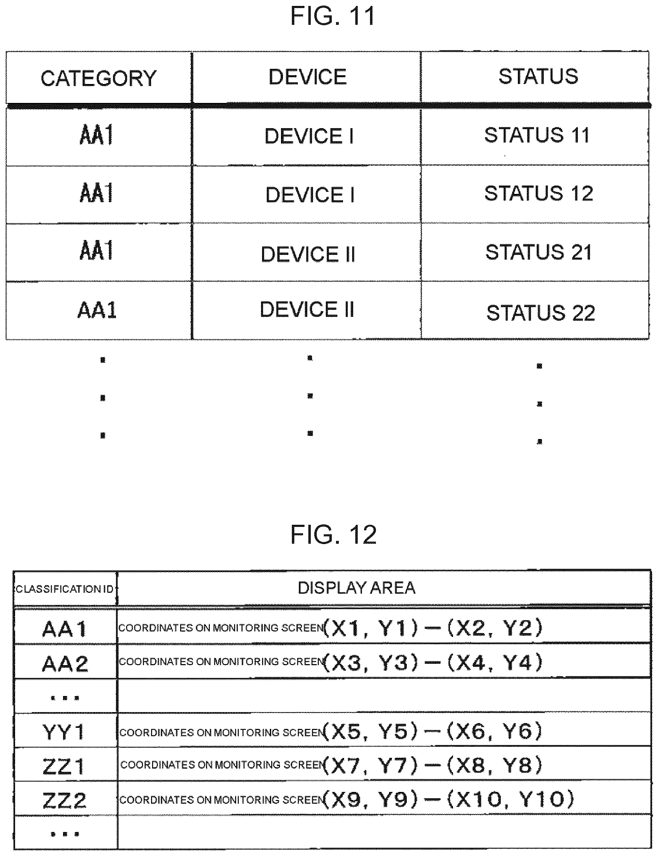

Processing by the process controller 320 is described in reference to FIG. 10. FIG. 10 is a flowchart of processing performed by the process controller of the integrated monitoring control apparatus according to Embodiment 1 of the present disclosure. Firstly, the process definer 321, on the basis of predetermined rules, analyzes the stored classification ID included in the status information, and determines the process for processing the status information (S201). The status information is information generated by the procedure of FIG. 7, and includes the classification ID such as the "AA1_BB1_YY1" illustrated in FIG. 4, for example, and the process definer 321 determines that the processing corresponding to each of AA1, BB1, and YY1 is performed simultaneously, or alternatively, determines that this processing is performed sequentially. Thereafter, the status information distributor 322, for each classification ID, causes distribution and storage, in the format illustrated in FIG. 11, for example, of the status information received by the receiver 310 as the pan-classification-ID status information 301 (S202). FIG. 11 illustrates an example of the status information stored in the pan-classification-ID status information of the integrated monitoring control apparatus according to Embodiment 1 of the present disclosure. Next, the pan-classification-ID controller 330 causes the screen display 340 and the sound outputter 350 to perform, for each classification ID, the process determined in step S201 by the process definer 321 (S203). For example, in the case in which the status information includes the classification ID such as "AA1_BB1_YY1" in FIG. 4, the pan-classification-ID controller 330 performs each process determined for AA1, BB1, and YY1. The process determined for AA1, AA2, and YY1, is a process that indicates a status method in the respective display area for which a position in the monitoring screen of FIG. 2 is defined such as in FIG. 12, for example. FIG. 12 illustrates an example of the definitions of the display areas that display the status information of the integrated monitoring control apparatus according to Embodiment 1 of the present disclosure.

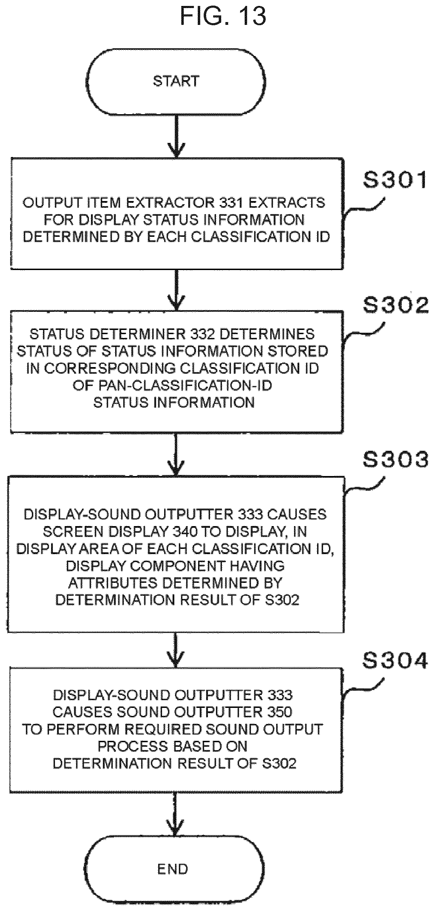

Operation of the pan-classification-ID controller 330 in step S203 is described in reference to FIG. 13. FIG. 13 is a flowchart illustrating the process performed by the pan-classification-ID controller of the integrated monitoring control apparatus according to Embodiment 1 of the present disclosure. Firstly, the output item extractor 331 extracts, for display, the status information determined for each of the classification IDs (S301). Thereafter, the status determiner 332 determines the status of the status information stored in the corresponding classification ID of the pan-classification-ID status information (S302). The status determiner 332, on the basis of the status information to which the classification ID is appended, determines special events such as the occurrence of a failure.

Thereafter, the display-sound outputter 333, for each of the classification IDs, causes the screen display 340 to display a display component having the attributes determined in step S302 as the determination result (S303). Here, the expression "display component" is taken to mean, for example, the detail screen start buttons such as those indicated by reference symbols 511 and 512 in FIG. 2A, the text screen displaying as text the status information such as that indicated by reference symbol 520 in FIG. 2A, or the like. For each of the display components, on the basis of the result determined by the status determiner 332, a display attribute may be set such as blinking and the like in response to the occurrence of a failure, for example. Further, when the display component is the start button, a configuration may be used that determines whether the same button does not previously exist in the display area of the corresponding classification ID, and that adds the display of the button if the same button does not previously exist.

Further, the display-sound outputter 333 causes the sound outputter 350 to perform sound output processing, such as the generation of a required warning sound, on the basis of the determination result determined in step S302 by the status determiner 332 (S304). The pan-classification-ID controller 330 performs the operations of steps S301 to S304 for all the classification IDs for which the status information of the pan-classification-ID status information 301 is previously stored.

In the aforementioned manner, the monitoring control devices 20-20c add the classification IDs categorizing the status information to the status information and then transmit the status information to the integrated monitoring control apparatus 30. The integrated monitoring control apparatus 30 is configured to process the status information by the process corresponding to the classification ID included in the status information and indicated by the process definer 321. The integrated monitoring control apparatus 30 thus can acquire the status information relating to different types of status from the monitoring control devices, and can form processes to process the status information as required for the integrated monitoring control apparatus.

### Embodiment 2

Although in Embodiment 1 the pan-classification-ID controller 330 processes the status information by the process predetermined for each classification ID, a configuration may be used in which the process of each classification ID is determined using a process correspondence table that assigns correspondence between the classification ID and the process for execution in the status information of each classification ID.

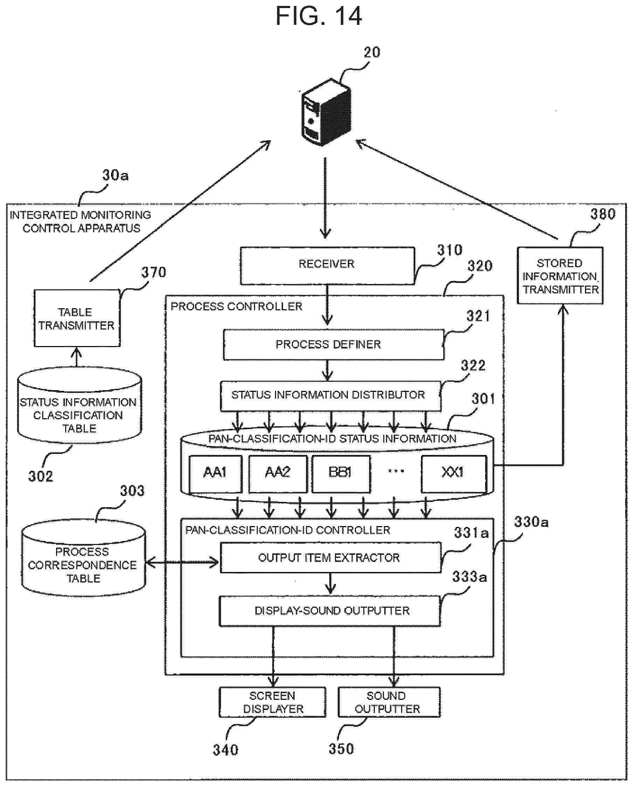

FIG. 14 is a function block diagram illustrating configuration of an integrated monitoring control apparatus 30a according to Embodiment 2 of the present disclosure. In FIG. 14, component elements that are the same or equivalent to those of FIG. 9 are assigned the same reference symbols, and description of such component elements is omitted. In FIG. 14, the integrated monitoring control apparatus 30a includes a process correspondence table 303 that indicates correspondence between the process for processing the status information and the classification ID included in the status information expressing the status of the monitoring control devices 20, 20a, 20b, and 20c or the equipment 10 monitored by the monitoring control devices 20, 20a, 20b, and 20c. Further, the integrated monitoring control apparatus 30a may include, rather than the process controller 320, a process controller 320a that controls processing that is performed on the status information and is determined for each classification ID on the basis of the process correspondence table 303. The process controller 320a is similar to the process controller 320 except for the inclusion of a pan-classification-ID controller 330a in place of the pan-classification-ID controller 330.

Further, the pan-classification-ID controller 330a includes an output item extractor 331a that, for each classification ID, acquires the process for the status information on the basis of the process correspondence table 303, and a display-sound outputter 333a that, for each classification ID, controls the performance of the process acquired by the output item extractor 331a. Except for the aforementioned integrated monitoring control apparatus 30a, configuration is similar to that of the integrated monitoring control apparatus 30.

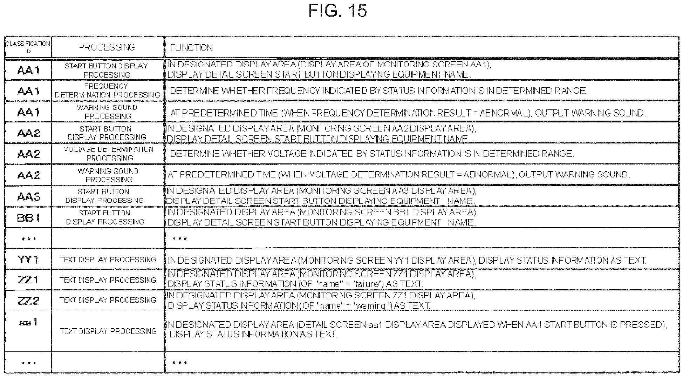

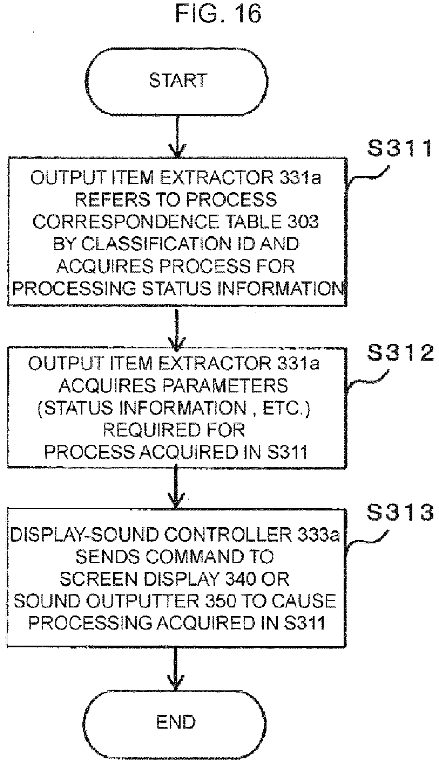

Operation of the pan-classification-ID controller 330a is described below. FIG. 15 illustrates an example of the process correspondence table of the integrated monitoring control apparatus according to Embodiment 2 of the present disclosure. FIG. 15 illustrates an example of the process correspondence table 303, which associates a process for processing the status information with each classification ID. FIG. 16 is a flowchart illustrating processing by the pan-classification-ID controller of the integrated monitoring control apparatus according to Embodiment 2 of the present disclosure. In FIG. 16, initially the output item extractor 331a refers to the process correspondence table 303 by the classification ID, and acquires the process for processing of the status information (S311). For example, in the example of FIG. 15, when the classification ID is AA1, start button display processing, frequency determination processing, and warning sound processing are acquired; and when the classification ID is YY1, text display processing is acquired.

Thereafter, the output item extractor 331a acquires the parameters (status information and the like) required for the step S311-acquired processing (S312). Here, in the case of taking as parameters the result of the status determination processing acquired in step S311, as in the warning sound processing corresponding to AA1 of FIG. 15, for example, correspondence is made between the result of the status determination processing and the input of the display processing. Thereafter, the display-sound outputter 333a sends a command to the screen display 340 or the sound outputter 350, and causes the processing acquired in step S311 by the output item extractor (S313).

In the aforementioned manner, by the configuration that uses the integrated monitoring control apparatus 30a, the process for processing of the status information is associated for each classification ID, and the status information is processed by the process that is associated with the classification ID of the received status information, thereby making possible a configuration in which the status information relating to statuses of different types is acquired from the monitoring control device, and the status information is processed by the integrated monitoring control apparatus in a flexible manner as required by a plurality of requirements.

### Reference Signs List

- 10: Equipment
- 20, 20a, 20b, 20c: Monitoring control device
- 30, 30a: Integrated monitoring control apparatus
- 40: Network
- 50, 50a: Monitoring screen
- 50b, 50c: Detail screen
- 201: Status information classification table
- 220: Status information generator
- 230: ID grantor
- 240: Status information transmitter
- 301: Pan-classification-ID status information
- 302: Status information classification table
- 303: Processing correspondence table
- 310: Receiver
- 320: Process controller
- 321: Process definer

## Claims

1. An integrated monitoring control apparatus comprising:
a process definer to indicate a correspondence between a classification ID included in status information indicating status of a monitoring control device or status of equipment subject to monitoring by the monitoring control device and a process performed on the status information, the classification ID being one of classification IDs;
a receiver to receive the status information transmitted from the monitoring control device; and
a process controller to cause, on the status information received by the receiver, performance of the process determined by the process definer based on the classification ID included in the status information.

2. The integrated monitoring control apparatus according to claim 1, wherein
the process definer further analyzes the classification ID and determines the process performed on the status information including the classification ID, the classification ID being expressed based on a predetermined rule.

3. The integrated monitoring control apparatus according to claim 1 or 2, wherein the process controller comprises:
a status information distributor to store the status information received by the receiver as pan-classification-ID status information distributed for each of the classification IDs; and
a pan-classification-ID controller to cause processing of the pan-classification-ID status information based on the process performed on the status information and the classification ID determined by the process definer.

4. A monitoring control device comprising:
an ID grantor to append a classification ID indicating a type of status information to the status information, the status information indicating status of equipment subject to monitoring or status of the monitoring control device; and
a status information transmitter to transmit to an integrated monitoring control apparatus the status information including the classification ID.

5. The monitoring control device according to claim 4, further comprising:
a status information classification definer to indicate a correspondence between the status information and the classification ID indicating a type of the status information; and
a status information generator to generate the status information, wherein
the ID grantor appends the classification ID determined by the status information classification definer from the status information to the status information.

6. An integrated monitoring control system comprising:
the integrated monitoring apparatus according to any one of claims 1 to 3; and
the monitoring control device according to claim 4 or 5.

7. An integrated monitoring control system comprising:
a monitoring control device to generate status information indicating status of equipment subject to monitoring or status of the monitoring control device, and append to the generated status information a classification ID indicating a type of the status information, and transmits the status information to an integrated monitoring control apparatus; and
the integrated monitoring control apparatus comprising
a process definer to indicate a correspondence between the classification ID and a process performed on the status information, and
a process controller to cause the status information to be processed by the process determined by the process definer based on the classification ID included in the status information received from the monitoring control device,.
